# EUROPEAN PATENT SPECIFICATION

(11) **EP 2 413 014 B1**
(45) Date of publication and mention of the grant of the patent: **20.08.2014**
(21) Application number: 11172004.1
(22) Date of filing: 29.06.2011
(51) Int. Cl.: F16L 37/22, F16L 55/07, F16K 27/00

(54) **Retention system**
Haltesystem
Système de retenue

(30) Priority: 30.07.2010 US 847455
(43) Date of publication of application: 01.02.2012
(73) Proprietor: Hamilton Sundstrand Corporation, Windsor Locks, CT 06096-1010 (US)
(72) Inventor: Leutwiler, Tomas R., Enfield, CT 06082 (US); Marocchini, Francis P., Somes, CT 06071 (US)
(74) Representative: Tomlinson, Kerry John

(56) References cited:
- GB-A- 1 249 846
- US-A- 2 461 705
- US-A- 2 821 209
- US-A- 4 249 572

## Description

### BACKGROUND

The present invention relates to a retention system and more particularly to a retention system suitable for use in hydraulic flow systems.

Hydraulic units are used in a variety of applications, including refrigeration systems. Most units consist of a housing with one or more bores in which valves or other components are installed to control the performance of the assembly and control pressure and flow within assembly passageways. The valves need a retention device to hold them in place. The most common types of retention for these devices are threaded sleeves or spools which need to be torqued into place. Due to thermal and vibrational forces acting on flow systems, especially those in the aerospace industry, threaded closures run the risk of becoming loose and backing out. Therefore, secondary retention methods are required to accompany the threaded closures. Some common secondary retention devices used are lock-wire (wire is mechanically attached to the threaded member and locked to another place), locking pellets and locking inserts. While these conventional methods work, they require adequate spatial envelope to fit within a system. In addition, they also place additional constraints on how the system may be set up, as well as adding weight to the system. A system for retaining a part within a housing using pins is known from US-A-2 461 705.

The invention is a system for retaining a part within a housing according to claim 1 and a method of using this system according to claim 13.

### BRIEF DESCRIPTION OF THE DRAWINGS

FIG. 1A is an exploded view of the retention device of the current invention.

FIG. 1B is a perspective view of the retention device of the current invention being inserted into a housing.

FIG. 2A shows an end view of an embodiment of a retention device according to the current invention set in a housing.

FIG. 2B shows a cross sectional view of the retention device of FIG. 2A along line 2B-2B.

FIG. 2C shows a cross section view of the retention device of FIG. 2B along the line 2C-2C.

FIG. 3A shows a perspective view of an embodiment of the retention device of the current invention in a housing, and with a tool compressing a retaining pin within the sleeve to enable removal of the sleeve from the housing.

FIG. 3B shows a cross sectional view of an embodiment of the retention device of the current invention with the pins compressed into the sleeve and held there by locking pins.

FIG. 4 shows a cross-sectional view of a section of a flow system which uses an embodiment of the retaining device of the current invention.

### DETAILED DESCRIPTION

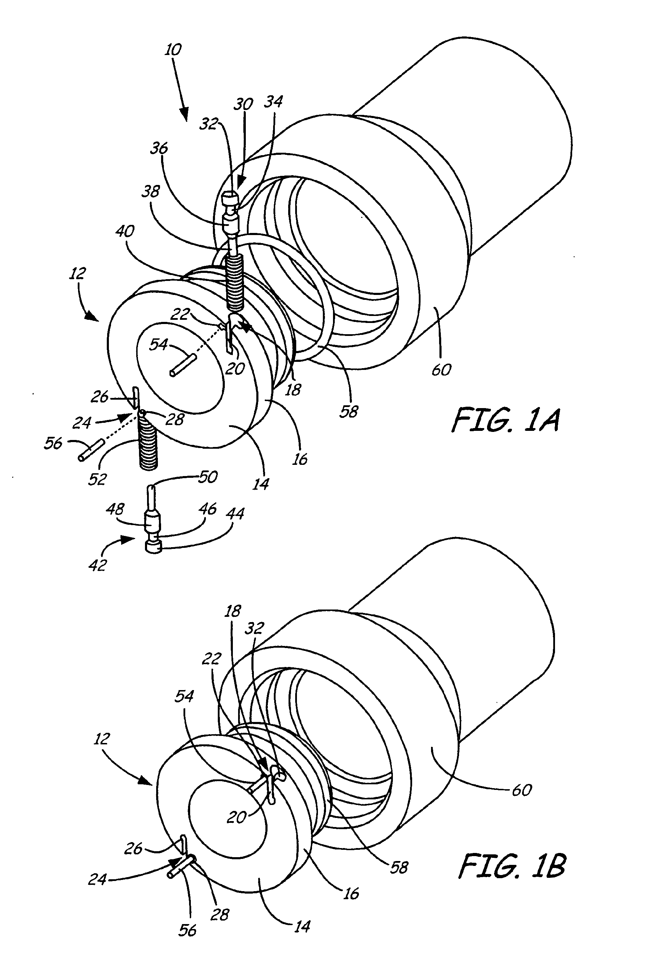

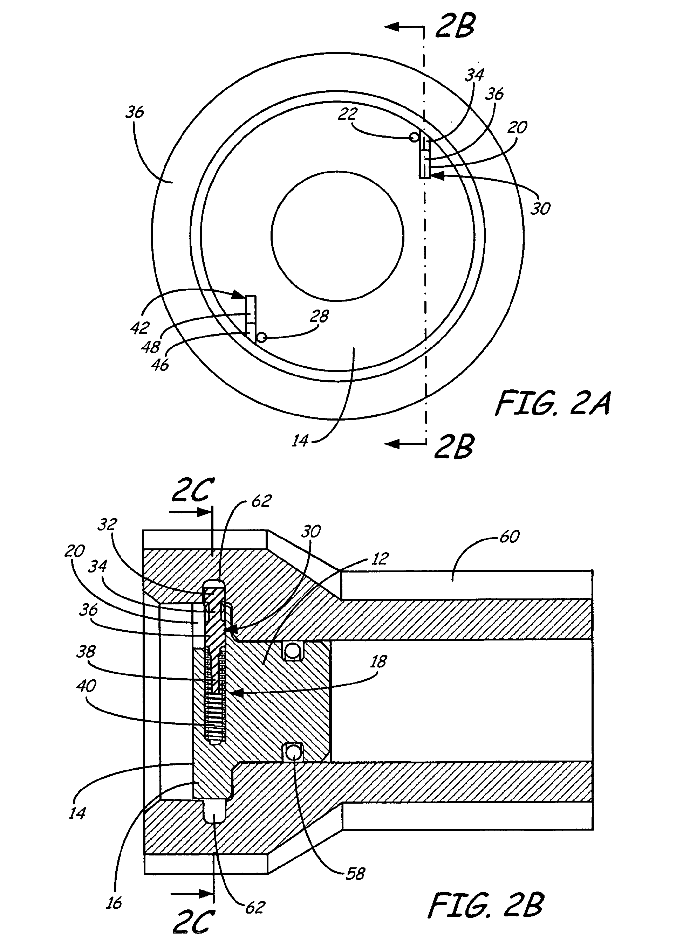

FIG. 1A is an exploded view of the retention system of the current invention. FIG. 1B is a perspective view of the retention system of the current invention being inserted into a housing. FIGS. 1A-1B include retention system 10 with valve sleeve 12 (which includes front face 14; flange 16; first blind hole 18 with slot 20 and locking hole 22, and second blind hole 24 with slot 26 and locking hole 28), first retaining pin 30 (with head 32, neck 34, shoulder 36 and stem 38) with spring 40, and second retaining pin 42 (with head 44, neck 46, shoulder 48 and stem 50) with spring 52, first locking pin 54, second locking pin 56, O-ring 58 and housing 60 with an annular recess 62 (see FIGS. 2B-2C).

Valve sleeve 12 includes first blind hole 18 and second blind hole 24 in flange 16, extending into flange 16 and parallel with front face 14. Slot 20 is in communication with at least part of first blind hole 18, and first locking hole 22 intersects with first blind hole 18. Slot 26 is in communication with at least part of second blind hole 24, and second locking hole 28 intersects with second blind hole 24. First blind hole 18 holds first retaining pin 30 and spring 40. Second blind hole 24 holds second retaining pin 42 and spring 52. Spring 40 connects to stem 38 of first retaining pin 30 and pushes retaining pin 30 outward from blind hole 18. Spring 52 connects to stem 50 of second retaining pin 42 and pushes second retaining pin 42 outward from second blind hole 24. Blind holes 18, 24 are of sufficient length so that each respective spring can compress and heads 32, 44 of retaining pins 30, 42 can fit entirely within flange 16 of valve sleeve 12. Retaining pins 30, 42 can be made of a metallic material such as steel or aluminum or a plastic, depending on requirements of the system.

FIG. 1B shows a perspective view of the retention device of the current invention being inserted into a housing. Retaining pins 30, 42 are compressing springs 40, 52 so that retaining pins 30, 42 are sitting completely inside flange 16 of valve sleeve 12. First locking pin 54 is inserted into first locking hole 22 to hold head 32 of first retaining pin 30 within sleeve 12, and second locking pin 56 is inserted into second locking hole 28 to hold head 44 of second retaining pin 42 within sleeve 12. This enables sleeve 12 to easily slide into housing 60. Locking pins 54, 56 each have a portion that is not inside of locking holes 22, 28 when inserted. This portion which "sticks out" provides an portion of each locking pin to easily grip and pull on when removal of locking pins 54, 56 is desired (when springs 40, 52 no longer need to be compressed due to sleeve 12 being set within housing 60).

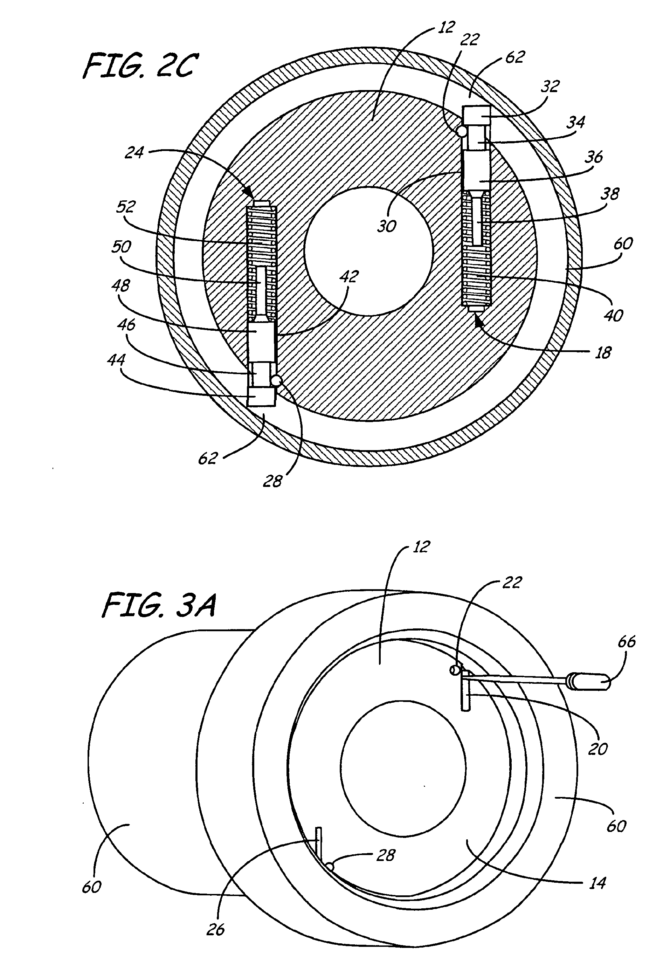

FIG. 2A shows an end view of an embodiment of a retention system according to the current invention set in a housing. FIG. 2B shows a cross sectional view of the retention system of FIG. 2A along line 2B-2B. FIG. 2C shows a cross section view of the retention system of FIG. 2B along the line 2C-2C. FIGS. 2A-2C include valve sleeve 12 (which includes front face 14; flange 16; first blind hole 18 with first slot 20 and first locking hole 22, and second blind hole 24 with second slot 26 and second locking hole 28), first retaining pin 30 (with head 32, neck 34, shoulder 36 and stem 38) with spring 40, and second retaining pin 42 (with head 44, neck 46, shoulder 48 and stem 50) with spring 52, first locking pin 54, second locking pin 56, O-ring 58 and housing 60 with annular recess 62.

As mentioned in relation to FIGS. 1A-1B, valve sleeve 12 is retained within housing 60 through retention system 10. Retaining pin 30 and spring 40 sit in first blind hole 18. Spring 40 contacts stem 38 of retaining pin 30 to push retaining pin 30 outward towards housing 60. When spring 40 pushes retaining pin 30 outwards, head 32 of retaining pin 30 engages recess 62 in housing 60. Second retaining pin 42 sits in second blind hole 24 and is pushed outward by spring 52 (in contact with stem 50 of retaining pin 42) so that head 44 of retaining pin 42 engages recess 62 in housing 60.

Blind holes 18, 24 are strategically placed in sleeve 12 at positions so that retaining pins 30, 42 can sit totally within flange 16 of sleeve 12 for installation or removal of sleeve 12 from housing 60, and so that when sleeve 12 is set in housing 60, pins 30 and 42 can act together to retain sleeve 12 in place within housing 60. This retention is attained by retaining pins 30, 42 being pushed outwards by springs 40, 52 so that heads 32, 44 engage annular recess 62 in housing 60.

Through the use of spring loaded pins which can retract to fit entirely within blind holes in a sleeve, the retention system of the current invention can securely hold a valve sleeve in place within a housing without the need for secondary retention systems which may take up additional space, weight, block some flow within the system and/or add other constraints to the system. In past systems, threaded closures were often used to retain valve sleeves and spools within housings. Because many flow systems are subject to thermal and vibrational forces, especially those in the aerospace industry, the threaded closures ran the risk of becoming loose and backing out. Therefore, secondary retention methods were required. These included such things as lock-wire, where wire is mechanically attached to the sleeve and locked to another place. Other methods of secondary retention used are lock pellets or locking inserts which may impede flow. The current invention retains a sleeve within a housing without the need for a secondary retention system and the additional constraints added by the secondary retention system which the torqued retention systems require.

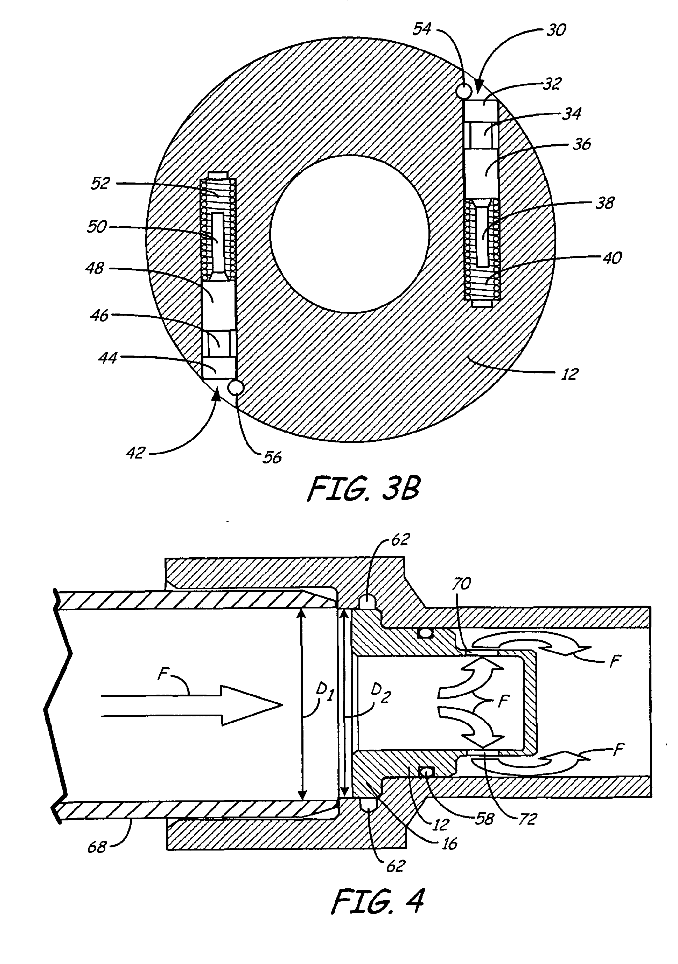

FIG. 3A shows a perspective view of an embodiment of the retention system of the current invention in a housing, and with a tool, such as an ice pick, compressing a retaining pin within the sleeve to enable removal of the sleeve from the housing. FIG. 3B shows a cross sectional view of an embodiment of the retention system of the current invention with the pins compressed into the sleeve and held there by locking pins. FIGS. 3A-3B include valve sleeve 12 with front face 14, flange 16, first blind hole 18 with first slot 20 and first locking hole 22, and second blind hole 24 with second slot 26 and second locking hole 28; first retaining pin 30 (with head 32, neck 34, shoulder 36 and stem 38) with spring 40; and second retaining pin 42 (with head 44, neck 46, shoulder 48 and stem 50) with spring 52; first locking pin 54; second locking pin 56; housing 60 with recess 62; and tool 66.

Tool 66 goes into slot 20, engages neck 34 of retaining pin 30, and moves pin 30 further into blind hole 18. This movement of pin 30 compresses spring 40 and moves head 32 of pin 30 within flange 16 of sleeve 12. Once head 32 of pin 30 is within flange 16 of sleeve 12, first locking pin 54 can be inserted into locking hole 28 (which intersects with blind hole 18). Tool 66 can then be removed from slot 20, and locking pin 54 (in locking hole 28) blocks head 32 of spring 30 from moving outwards towards housing, and therefore keeps spring 40 compressed and pin 30 entirely within sleeve 12. The same procedure can be used to compress spring 52 and retain pin 42 within blind hole 24 using locking pin 42.

As seen in FIGS. 3A - 3B, sleeve 12 with retention system can easily be set in or removed from within housing 60. This can be done by using tool 66, which may be any suitable tool (e.g., an awl, an ice pick, etc.), to engage the neck of the retaining pin, and move the pin further into the blind hole in the sleeve so that the head of the pin is within the sleeve, compressing the spring which is in contact with the pin stem. The pin can be held in that position by inserting a locking pin into the locking hole. Because the locking hole intersects the blind hole, the locking pin contacts the head of the pin keeping the pin within the sleeve and the spring compressed to easily set in or remove the sleeve from a housing. This design enables the sleeve and retention device to be inserted, removed and reused, as nothing is damaged through use of a tool to engage the neck of the pin, move it inwards and use of an easily removable locking pin to prevent the retaining pin from moving outward during setting in or removal of the sleeve from the housing.

FIG. 4 shows a cross-sectional view of a section of a flow system which uses an embodiment of the retaining system of the current invention, and includes pipe fitting 68 with inner diameter D₁; valve sleeve 12 with flange 16, flow channels 70, 72 and outer diameter D₂; O-ring 58; housing 60 with annular recess 62 and arrows indicating fluid flow F.

Pipe fitting 68 is welded into housing 60 to bring pipe fitting 68 and sleeve 12 into fluid flow communication. Sleeve 12 is retained within housing 60 by heads 32, 44 of pins 30, 42 being pushed outward (by springs 40, 52 acting on pins 30, 42, see FIGS. 2B-2C) to engage recess 62.

As can be seen in FIG. 4, outer diameter D₂ of sleeve 12 is smaller than inner diameter D₁ of pipe fitting 68. By using spring loaded pins 30, 42 which fit into blind holes 18, 24 within housing 60, sleeve 12 is able to be retained in this system despite the outer diameter D₂ of sleeve 12 being smaller than inner diameter D₁ of pipe fitting 68. The current invention retains sleeve within a housing even in "stepped bore" situations as demonstrated in FIG. 4, while eliminating the need to use secondary retention system (as needed in past systems) which can impede some flow and add weight to the system.

In summary, the retention system described herein is a simple and small means to retain flow controlling assemblies within a housing through the use of blind holes with springs, retaining pins and an annular recess in the housing which also allows easy insertion and removal of the sleeve from the housing. The easy insertion and removal comes from the retaining pins and springs sitting in the blind holes, and the retaining pins being able to be moved completely into the blind hole by a tool engaging the retaining pin neck through a slot in communication with at least a part of the blind hole, and the retaining pin being able to be retained in that position with an easily removable locking pin inserted a locking hole, allowing the sleeve with retention system to be easily inserted, removed and reused. This design can reduce or eliminate the need for additional closures and retention means, and add more flexibility into design of the overall system. The smaller size also reduces the weight of the system, resulting in economic benefits.

While the invention has been discussed mostly in relation to including two spring loaded retaining pins, it can include only one spring loaded retaining pin or three or more spring-loaded retaining pins to hold the valve sleeve in place depending on the requirements of the system. The spring-loaded retaining pins can also have a different configuration than those shown in FIGS. 1A-4, as long as they are able to sit fully within the valve sleeve for installation and removal and be pushed outward into holes in the housing when the sleeve is set within the housing. Generally, if three spring-loaded retaining pins are used, they would be similar to what is shown in FIGS. 1A-3B, only the three spring-loaded retaining pins would be equally spaced throughout the sleeve, sitting about 120 degrees apart. If four pins were used, they would sit about 90 degrees apart and generally be equally spaced.

While the invention has been discussed mostly in relation to setting a valve sleeve within a housing, it could also be used to retain a closure, a static spool or other mechanisms in place within a housing, a bore or another structure in which they sit. It is intended mainly for unidirectional flow systems, but can withstand reduced loading in bi-directional flow systems. The system may be used as part of a hydraulic flow system in an aerospace application.

While the invention has been described with reference to an exemplary embodiment(s), it will be understood by those skilled in the art that various changes may be made and equivalents may be substituted for elements thereof without departing from the scope of the invention. In addition, many modifications may be made to adapt a situation or material to the teachings of the invention without departing from the essential scope thereof. Therefore, it is intended that the invention not be limited to the embodiment(s) disclosed, but that the invention will include all embodiments falling within the scope of the appended claims.

## Claims

1. A system for retaining a part (12) within a housing (60), the system comprising:
the housing (60), the part (12) with a face (14) to set inside the housing, the part having a first blind hole (18) parallel to the face, a first locking hole (22) intersecting the first blind hole, and a first slot (20) in the face in communication with at least a part of the first blind hole;
a first retaining pin (30), set inside the first blind hole, having a head (32) to engage the housing, a neck (34) which can be engaged through the slot to move the retaining pin further into the blind hole so that the pin head sits within the part, a shoulder (36) and a stem (38);
a first spring (40) to engage the stem of the first retaining pin, wherein the first spring pushes the pin head outwards from the first blind hole;
a first locking pin (54) to set in the first locking hole to hold the first retaining pin head within the part (12) when the part (12) is not set inside the housing; and
an annular recess (62) in the housing to receive the head of the first retaining pin when the part is set inside the housing and the first locking pin is removed, wherein the part is retained within the housing when the first spring pushes the first pin outward so that the head of the first retaining pin engages the recess in the housing.

2. The system of claim 1, and further comprising:
a second blind hole (24) in the part parallel to the face, a second locking hole (28) intersecting the second blind hole, and a second slot (26) in the face in communication with at least a part of the second blind hole;
a second retaining pin (42), set inside the second blind hole, having a head (44) to engage the housing, a neck (46) which is engageable through the slot to move the second retaining pin further into the second blind hole so that the pin head sits within the part, a shoulder (48) and a stem (60);
a second spring (52) to engage the stem of the second retaining pin, wherein the second spring pushes the pin head outwards from the second blind hole; and
a second locking pin (56) to set in the second locking hole to hold the second retaining pin head within the part (12) when the sleeve is not set inside the housing; wherein the part (12) is retained within the housing when the second locking pin is removed and the second spring pushes the second pin outward so that the head of the first retaining pin engages the annular recess in the housing.

3. The system of claim 1 or 2, wherein the part and the housing are co-axial.

4. The system of claim 1, 2 or 3, wherein the part comprises a spool or a sleeve.

5. The system of claim 1, 2, 3 or 4 comprising a tool (66), wherein the neck is engageable by the tool (66).

6. The system of claim 5, wherein the tool (66) is the shape of an ice pick; or wherein the tool is the shape of an awl.

7. The system of claim 5 or 6, wherein after the part (12) has been set within the housing, the tool can be used to engage the neck to move the retaining pin into the sleeve until the head is within the sleeve, and the locking pin can be reinserted to keep the retaining pin within the sleeve, allowing for removal of the part (12) from the housing.

8. The system of any preceding claim, wherein when the or each locking pin (54, 56) is set in a locking hole (22, 28), a portion of the pin is not in the hole.

9. The system of any preceding claim, wherein the or each retaining pin (30, 42) is made of a metallic material or plastic.

10. The system of any preceding claim, and further comprising:
an O-ring (58) to form a seal between the part and the housing.

11. The system of any preceding claim comprising a valve wherein the part is set within the housing to hold the valve in place.

12. The system of claim 11, wherein the valve is a unidirectional valve.

13. A method of using the system of any preceding claim for retaining the part (12) within the housing (60), the method comprising:
inserting a first spring loaded retaining pin (30) into a first blind hole (18) within a part;
moving the first retaining pin so that the spring (40) is compressed and the first retaining pin is totally inside the part by engaging a part of the first retaining pin with a tool (60) going though a first slot (20) in communication with at least part of the first blind hole;
inserting a first locking pin (54) into a first locking hole (22) which intersects with the first blind hole so that the first locking pin holds the first retaining pin within the part, compressing the springs;
inserting the part into the housing; and
removing the first locking pin to allow the first retaining pin to engage an annular recess in the housing.

14. The method of claim 13, and further comprising:
inserting a second spring loaded retaining pin (42) into a second blind hole (24) within the part;
moving the second retaining pin so that the spring (52) is compressed and the second retaining pin is totally inside the part by engaging a part of the second retaining pin with the tool (60) going through a second slot (26) in communication with at least part of the second blind hole;
inserting a second locking pin (56) into a second locking hole (28) which intersects with the second blind hole so that the second locking pin holds the second retaining pin within the part, compressing the springs;
inserting the part into the housing; and
removing the second locking pin to allow the second retaining pin to engage an annular recess in the housing.

15. The method of claim 14 in relation to claim 5, wherein the sleeve can be removed from within the housing by moving the first retaining pin so that the spring is compressed and the first retaining pin is totally inside the sleeve by engaging a part of the first retaining pin with the tool going though the first slot in communication with at least part of the first blind hole and then inserting the first locking pin into the first locking hole which intersects with the first blind hole, and then moving the second retaining pin so that the spring is compressed and the second retaining pin is totally inside the sleeve by engaging a part of the second retaining pin with the tool going though the second slot in communication with at least part of the second blind hole and then inserting the second locking pin into the second locking hole which intersects with the second blind hole, so that the first locking pin and the second locking pin hold the first retaining pin and the second retaining pin within the sleeve, compressing the springs, and removing the sleeve from the housing.

## Patentansprüche

1. System zum Halten eines Elements (12) in einem Gehäuse (60), wobei das System Folgendes umfasst:
das Gehäuse (60), das Element (12) mit einer Fläche (14), die im Gehäuse positioniert wird, wobei das Element ein erstes Sackloch (18) parallel zu der Fläche, ein erstes Verriegelungsloch (22), das das erste Sackloch schneidet, und einen ersten Schlitz (20) in der Fläche, der mit wenigstens einem Teil des ersten Sacklochs in Kommunikation steht, aufweist;
einen ersten Haltestift (30), der im ersten Sackloch positioniert ist und einen Kopf (32) zum Koppeln mit dem Gehäuse, einen Hals (34), der durch den Schlitz gegriffen werden kann, um den Haltestift weiter in das Sackloch zu bewegen, sodass der Stiftkopf im Element sitzt, eine Schulter (36) und einen Stiel (38) aufweist;
eine erste Feder (40), um den Stiel des ersten Haltestifts zu greifen, wobei die erste Feder den Stiftkopf vom ersten Sackloch aus nach außen drückt;
einen ersten Verriegelungsstift (54), der im ersten Verriegelungsloch angeordnet ist, um den ersten Haltestiftkopf im Element (12) zu halten, wenn das Element (12) nicht im Gehäuse positioniert ist; und
eine ringförmige Vertiefung (62) im Gehäuse, um den Kopf des ersten Haltestifts aufzunehmen, wenn das Element im Gehäuse positioniert ist und der erste Verriegelungsstift entfernt wird, wobei das Element im Gehäuse gehalten wird, wenn die erste Feder den ersten Stift nach außen drückt, sodass der Kopf des ersten Haltestifts in die Vertiefung im Gehäuse greift.

2. System nach Anspruch 1, das ferner Folgendes umfasst:
ein zweites Sackloch (24) im Element parallel zu der Fläche, ein zweites Verriegelungsloch (28), das das zweite Sackloch schneidet, und einen zweiten Schlitz (26) in der Fläche, der mit wenigstens einem Teil des zweiten Sacklochs in Kommunikation steht;
einen zweiten Haltestift (42), der im zweiten Sackloch positioniert ist und einen Kopf (44) zum Koppeln mit dem Gehäuse, einen Hals (46), der durch den Schlitz gegriffen werden kann, um den zweiten Haltestift weiter in das zweite Sackloch zu bewegen, sodass der Stiftkopf im Element sitzt, eine Schulter (48) und einen Stiel (60) aufweist;
eine zweite Feder (52), um den Stiel des zweiten Haltestifts zu greifen, wobei die zweite Feder den Stiftkopf vom zweiten Sackloch aus nach außen drückt; und
einen zweiten Verriegelungsstift (56), der im zweiten Verriegelungsloch positioniert wird, um den zweiten Verriegelungsstiftkopf im Element (12) zu halten, wenn die Manschette nicht im Gehäuse positioniert ist; wobei das Element (12) im Gehäuse gehalten wird, wenn der zweite Verriegelungsstift entfernt wird und die zweite Feder den zweiten Stift nach außen drückt, sodass der Kopf des ersten Haltestifts in die ringförmige Vertiefung im Gehäuse greift.

3. System nach Anspruch 1 oder 2, wobei das Element und das Gehäuse koaxial sind.

4. System nach Anspruch 1, 2 oder 3, wobei das Element eine Rolle oder eine Manschette umfasst.

5. System nach Anspruch 1, 2, 3 oder 4, das ein Werkzeug (66) umfasst, wobei der Hals durch das Werkzeug (66) gegriffen werden kann.

6. System nach Anspruch 5, wobei das Werkzeug (66) die Form eines Eispickels aufweist; oder wobei das Werkzeug die Form einer Ahle aufweist.

7. System nach Anspruch 5 oder 6, wobei, nachdem das Element (12) im Gehäuse positioniert wurde, das Werkzeug verwendet werden kann, um den Hals zu greifen, um den Haltestift in die Manschette zu bewegen, bis sich der Kopf in der Manschette befindet, und der Verriegelungsstift erneut eingeführt werden kann, um den Haltestift in der Manschette zu halten, wodurch das Element (12) aus dem Gehäuse entfernt werden kann.

8. System nach einem der vorangehenden Ansprüche, wobei sich, wenn der oder jeder Verriegelungsstift (54, 56) in einem Verriegelungsloch (22, 28) positioniert wird, ein Teil des Stifts nicht im Loch befindet.

9. System nach einem der vorangehenden Ansprüche, wobei der oder jeder Haltestift (30, 42) aus metallischem Material oder Kunststoff hergestellt ist.

10. System nach einem der vorangehenden Ansprüche, das ferner Folgendes umfasst: einen O-Ring (58), um eine Dichtung zwischen dem Element und dem Gehäuse zu bilden.

11. System nach einem der vorangehenden Ansprüche, das ein Ventil umfasst, wobei das Element im Gehäuse positioniert wird, um das Ventil in Position zu halten.

12. System nach Anspruch 11, wobei das Ventil ein Rückschlagventil ist.

13. Verfahren unter Verwendung des Systems nach einem der vorangehenden Ansprüche zum Halten des Elements (12) im Gehäuse (60), wobei das Verfahren Folgendes umfasst:
Einführen eines ersten federgelagerten Haltestifts (30) in ein erstes Sackloch (18) in einem Element;
Bewegen des ersten Haltestifts, sodass die Feder (40) zusammengedrückt wird und sich der erste Haltestift vollständig im Element befindet, durch Greifen eines Teils des ersten Haltestifts mit einem Werkzeug (60), das durch einen ersten Schlitz (20) greift, der mit wenigstens einem Teil des ersten Sacklochs in Kommunikation steht;
Einführen eines ersten Verriegelungsstifts (54) in ein erstes Verriegelungsloch (22), das das erste Sackloch schneidet, sodass der erste Verriegelungsstift den ersten Haltestift im Element hält, wodurch die Federn zusammengedrückt werden;
Einführen des Elements in das Gehäuse; und
Entfernen des ersten Verriegelungsstifts, um es dem ersten Haltestift zu ermöglichen, eine ringförmige Vertiefung im Gehäuse zu greifen.

14. Verfahren nach Anspruch 13, das ferner Folgendes umfasst:
Einführen eines zweiten federgelagerten Haltestifts (42) in ein zweites Sackloch (24) im Element;
Bewegen des zweiten Haltestifts, sodass die Feder (52) zusammengedrückt wird und sich der zweite Haltestift vollständig im Element befindet, durch Greifen eines Teils des zweiten Haltestifts mit dem Werkzeug (60), das durch einen zweiten Schlitz (26) greift, der mit wenigstens einem Teil des zweiten Sacklochs in Kommunikation steht;
Einführen eines zweiten Verriegelungsstifts (56) in ein zweites Verriegelungsloch (28), das das zweite Sackloch schneidet, sodass der zweite Verriegelungsstift den zweiten Haltestift im Element hält, wodurch die Federn zusammendrückt werden;
Einführen des Elements in das Gehäuse; und
Entfernen des zweiten Verriegelungsstifts, um es dem zweiten Haltestift zu ermöglichen, eine ringförmige Vertiefung im Gehäuse zu greifen.

15. Verfahren nach Anspruch 14 in Bezug auf Anspruch 5, wobei die Manschette aus dem Gehäuse entfernt werden kann, indem der erste Haltestift bewegt wird, sodass die Feder zusammengedrückt wird und sich der erste Haltestift vollständig in der Manschette befindet, indem ein Teil des ersten Haltestifts mit dem Werkzeug gegriffen wird, das durch den ersten Schlitz greift, der mit wenigstens einem Teil des ersten Sacklochs in Kommunikation steht, und anschließend der erste Verriegelungsstift in das erste Verriegelungsloch, das das erste Sackloch schneidet, eingeführt wird und der zweite Haltestift dann bewegt wird, sodass die Feder zusammengedrückt wird und sich der zweite Haltestift vollständig in der Manschette befindet, indem ein Teil des zweiten Haltestifts mit dem Werkzeug gegriffen wird, das durch den zweiten Schlitz greift, der mit wenigstens einem Teil des zweiten Sacklochs in Kommunikation steht, und der zweite Verriegelungsstift dann in das zweite Verriegelungsloch, das das zweite Sackloch schneidet, eingeführt wird, sodass der erste Verriegelungsstift und der zweite Verriegelungsstift den ersten Haltestift und den zweiten Haltestift in der Manschette halten, wodurch die Federn zusammengedrückt werden, und die Manschette aus dem Gehäuse entfernt wird.

## Revendications

1. Système de retenue d'une pièce (12) dans un boîtier (60), le système comprenant :
le boîtier (60), la pièce dotée d'une face (14) à placer à l'intérieur du boîtier, la pièce ayant un premier trou aveugle (18) parallèle à la face, un premier trou de verrouillage (22) coupant le premier trou aveugle et une première fente (20) dans la face en communication avec au moins une pièce du premier trou aveugle ;
une première broche (30) de retenue, située à l'intérieur du premier trou aveugle, comportant une tête (32) à engager dans le boîtier, un cou (34) qu'on peut engager à travers la fente pour déplacer la clavette d'arrêt plus loin dans le trou aveugle de sorte que la tête de broche loge dans la pièce, un épaulement (36) et une tige (38) ;
un premier ressort (40) à engager avec la tige de la première clavette d'arrêt, le premier ressort poussant la tête de broche vers l'extérieur à partir du premier trou aveugle ;
une première broche de verrouillage (54) à placer dans le premier trou de verrouillage pour maintenir la tête de la broche de retenu dans la pièce (12) lorsque la pièce (12) n'est pas logée à l'intérieur du boîtier ; et
un évidement annulaire (62) dans le boîtier pour recevoir la tête de la première clavette d'arrêt lorsque la pièce est logée à l'intérieur du boîtier et qu'on enlève la première clavette d'arrêt,
la pièce étant retenue dans le boîtier lorsque le premier ressort pousse la première broche vers l'extérieur de sorte que la tête de la première clavette d'arrêt entre en contact avec l'évidement dans le boîtier.

2. Système selon la revendication 1, comprenant en outre :
un deuxième trou aveugle (24) dans la pièce parallèle à la face, un deuxième trou de verrouillage (28) coupant le deuxième trou aveugle, et une deuxième fente (26) dans la face en communication avec au moins une partie du deuxième trou aveugle ;
une deuxième clavette d'arrêt (42), placée à l'intérieur du deuxième trou aveugle, comportant une tête (44) pour entrer dans le boîtier, un cou (46) qu'on peut passer à travers la fente pour déplacer la deuxième clavette d'arrêt plus loin dans le deuxième trou aveugle pour que la tête de broche loge dans la pièce, un épaulement (48) et une tige (60) ;
un deuxième ressort (52) pour entrer en contact avec la tige de la deuxième clavette d'arrêt, le deuxième ressort poussant la tête de broche vers l'extérieur à partir du deuxième trou aveugle ; et
une deuxième broche de verrouillage (56) à placer dans le deuxième trou de verrouillage pour maintenir la deuxième tête de clavette d'arrêt au sein de la pièce (12) lorsque la gaine n'est pas placée à l'intérieur du boîtier ; la pièce (12) étant retenue dans le boîtier lorsque la deuxième broche de verrouillage est enlevée et que le deuxième ressort appuie sur la deuxième broche vers l'extérieur de sorte que la tête de la première clavette d'arrêt pénètre dans l'évidement annulaire dans le boîtier.

3. Système selon la revendication 1 ou 2, dans lequel la pièce et le boîtier sont coaxiaux.

4. Système selon la revendication 1, 2 ou 3, dans lequel la pièce comprend une bobine ou un manchon.

5. Système selon la revendication 1, 2, 3 ou 4 comprenant un outil (66) où le cou est atteignable grâce à l'outil (66).

6. Système selon la revendication 5, dans lequel l'outil (66) a la forme d'un pic à glace ; ou dans lequel l'outil a la forme d'un poinçon.

7. Système selon la revendication 5 ou 6, dans lequel, après le placement de la pièce (12) dans le boîtier, l'outil peut servir à atteindre le cou pour déplacer la clavette d'arrêt dans la gaine jusqu'à ce que la tête soit dans la gaine, et où la broche de verrouillage peut être introduite pour maintenir la clavette d'arrêt dans la gaine, en permettant le retrait de la pièce (12) du boîtier.

8. Système selon l'une quelconque des revendications précédentes, dans lequel lorsque la broche de verrouillage ou chacun d'entre elles (54, 56) est placée dans un trou de verrouillage (22, 28), une partie de la broche ne se trouve pas dans le trou.

9. Système selon l'une quelconque des revendications précédentes, dans lequel la clavette d'arrêt ou chacune d'entre elles (30, 42) est constituée d'un matériau métallique ou de matière plastique.

10. Système selon l'une quelconque des revendications précédentes, comprenant en outre :
un joint torique (58) formant un joint entre la pièce et le boîtier.

11. Système selon l'une quelconque des revendications précédentes, comprenant une soupape où la pièce est placée dans le boîtier pour maintenir la soupape en place.

12. Système selon la revendication 11, dans lequel la soupape est une soupape unidirectionnelle.

13. Procédé d'utilisation du système selon l'une quelconque des revendications précédentes, pour retenir la pièce (12) dans le boîtier (60), ce procédé comprenant :
l'introduction d'une première clavette d'arrêt à ressort (30) dans un premier trou aveugle (18) à l'intérieur d'une pièce ;
le déplacement de la première broche de retenue de sorte que le ressort (40) soit comprimé et que la première broche de retenue soit totalement à l'intérieur de la pièce par contact d'une pièce de la première broche de retenue avec un outil (60) traversant une première fente (20) en communication avec au moins une partie du premier trou aveugle ;
l'insertion d'une première broche de verrouillage (54) dans un premier trou de verrouillage (22) qui coupe le premier trou aveugle de sorte que la première broche de verrouillage maintienne la première broche de retenue dans la pièce, en comprimant les ressorts ;
l'insertion de la pièce dans le boîtier ; et
le retrait de la première broche de verrouillage pour permettre à la première broche de retenue de s'engager dans un évidement annulaire dans le boîtier.

14. Procédé selon la revendication 13, comprenant en outre :
l'introduction d'une deuxième broche de retenue à ressort (42) dans un deuxième trou aveugle (24) dans la pièce ;
le déplacement de la deuxième broche de retenue de sorte que le ressort (52) soit comprimé et que la deuxième broche de retenue se trouve totalement à l'intérieur de la pièce par contact d'une pièce de la deuxième broche de retenue avec l'outil (60) traversant une deuxième fente (26) en communication avec au moins une partie du deuxième trou aveugle ;
l'introduction d'une deuxième broche de verrouillage (56) dans un deuxième trou de verrouillage (28) qui coupe le deuxième trou aveugle, de sorte que la deuxième broche de verrouillage maintienne la deuxième broche de retenue dans la pièce en comprimant les ressorts ;
l'introduction de la pièce dans le boîtier ; et
le retrait de la deuxième broche de verrouillage pour permettre à la deuxième broche de retenue de pénétrer dans un évidement annulaire dans le boîtier.

15. Procédé selon la revendication 14, en lien avec la revendication 5, dans lequel la gaine peut être retirée de l'intérieur du boîtier par déplacement de la première broche de retenue de sorte que le ressort soit comprimé et où la première broche de retenue se trouve totalement à l'intérieur de la gaine par contact d'une partie de la première broche de retenue alors que l'outil traverse la première fente en communication avec au moins une partie du premier trou aveugle, puis par insertion de la première broche de verrouillage dans le premier trou de verrouillage qui coupe le premier trou aveugle, puis par déplacement de la deuxième broche de retenue de sorte que le ressort soit comprimé et que la deuxième broche de retenue soit totalement à l'intérieur de la gaine par contact d'une partie de la deuxième broche de retenue avec l'outil traversant la deuxième fente en communication avec au moins une partie du deuxième trou aveugle, puis par introduction de la deuxième broche de verrouillage dans le deuxième trou de verrouillage qui coupe le deuxième trou aveugle, de sorte que la première broche de verrouillage et la deuxième broche de verrouillage maintiennent la première broche de retenue et la deuxième broche de retenue dans la gaine, en compriment les ressorts, puis par retrait de la gaine du boîtier.
